# EUROPÄISCHE PATENTSCHRIFT

(11) **EP 2 446 156 B1**
(45) Veröffentlichungstag und Bekanntmachung des Hinweises auf die Patenterteilung: **25.02.2015**
(21) Anmeldenummer: 10730081.6
(22) Anmeldetag: 22.06.2010
(51) Int. Cl.: F16B 37/04

(54) **HALTEDÜBEL**
HOLDING DOWEL
CHEVILLE

(30) Priorität: 23.06.2009 DE 102009030040
(43) Veröffentlichungstag der Anmeldung: 02.05.2012
(73) Patentinhaber: TRW Automotive Electronics & Components GmbH, 78315 Radolfzell (DE)
(72) Erfinder: HOFMANN, Juergen, 67304 Eisenberg (DE); DEMERATH, Michael, 66909 Hüffler (DE)
(74) Vertreter: Prinz & Partner mbB
(86) Internationale Anmeldenummer: PCT/EP2010/003814
(87) Internationale Veröffentlichungsnummer: WO 2011/003514

(56) Entgegenhaltungen:
- DE-A1- 10 231 274
- DE-U1-202007 003 635
- US-A- 3 534 797
- US-A- 5 636 953
- US-B1- 6 244 805

## Beschreibung

Die Erfindung betrifft einen Haltedübel zur Befestigung eines Befestigungsmittels an einem Bauteil, insbesondere an einem Karosserieteil, wobei der Haltedübel in eine Öffnung des Bauteils eingesetzt und arretiert werden kann und eine Aufnahme für das Befestigungsmittel aufweist.

Haltedübel werden im Fahrzeugbau in verschiedenen Formen eingesetzt, um ein Befestigungsmittel, beispielsweise eine Schraube, mit der ein Fahrzeugteil an einem Karosserieteil gehalten wird, an diesem zu befestigen. Der Haltedübel wird in eine Öffnung des Karosserieteils eingesetzt und fixiert und anschließend das Befestigungsmittel in eine am Haltedübel vorgesehene Aufnahme eingesetzt. Um ein Eindringen von beispielsweise Schmutz oder Feuchtigkeit durch die Öffnung zu verhindern, weisen Haltedübel Dichtungen auf, die in montiertem Zustand des Haltedübels am Rand der Öffnung anliegen und so die Öffnung abdichten. Ein solcher Haltedübel ist beispielsweise aus der DE 20 2007 003 635 U1 bekannt.

Die Erfindung schafft einen Haltedübel, der im Vergleich zum Stand der Technik eine verbesserte Abdichtung der Öffnung im Karosserieteil ermöglicht.

Zur Lösung der Aufgabe ist dafür ein Haltedübel zur Befestigung eines Befestigungsmittels an einem Bauteil, insbesondere an einem Karosserieteil, vorgesehen, wobei der Haltedübel in eine Öffnung des Bauteils eingesetzt und arretiert werden kann und eine Aufnahme für das Befestigungsmittel aufweist. Der Haltedübel hat einen Grundkörper aus einem harten Material, der in die Öffnung ragt und den Haltedübel in der Öffnung fixieren kann, und ein Dichtungselement aus einem flexiblen Kunststoff, das eine umlaufende Dichtlippe aufweist, die in montiertem Zustand des Haltedübels am Bauteil anliegt und die Öffnung des Bauteils abdichtet. Das Dichtungselement ist zumindest teilweise aus einem Material hergestellt, das unter Wärmeeinwirkung eine stoffschlüssige Verbindung mit dem Bauteil eingeht. Erfindungsgemäß sind am Grundkörper Federelemente vorgesehen, die den Haltedübel in der Öffnung zentrieren. Der Haltedübel wird so weit in die Öffnung eingeschoben, bis die umlaufende Dichtlippe am Rand der Öffnung anliegt und diese abdichtet. Anschließend wird das am Bauteil anliegende Dichtungselement über seinen Schmelzpunkt erhitzt, sodass die Dichtlippe beim Abkühlen eine stoffschlüssige Verbindung mit dem Bauteil eingeht. Der Haltedübel ist als mit dem Dichtungselement flächig mit dem Rand der Öffnung verklebt und dichtet die Öffnung vollständig ab. Durch diese Verklebung und die Verwendung eines flexiblen Materials für das Dichtungselement ist die Öffnung auch bei mechanischer Beanspruchung, beispielsweise bei der Befestigung des Befestigungsmittels oder bei Vibrationen zuverlässig abgedichtet. Zudem ist der Haltedübel durch die Verklebung zusätzlich in der Öffnung fixiert, so dass ein sicherer Halt des Befestigungsmittels gewährleistet ist. Die Federelemente können unterschiedliche Durchmesser der Öffnung ausgleichen, so dass der Haltedübel für verschieden große Öffnung verwendet werden kann. Die Federelemente sind beispielsweise symmetrisch angeordnet und in montiertem Zustand des Haltedübels gegen den Rand der Öffnung vorgespannt, so dass der Haltedübel mittig in der Öffnung zentriert ist.

Das Dichtungselement kann auch aus einem Kunststoff hergestellt sein, der sich unter Wärmeeinwirkung irreversibel ausdehnt. Das Dichtungselement kann beim Ausdehnen Unebenheiten oder Fehlstellen im Bauteil ausgleichen, sodass der erfindungsgemäße Haltedübel eine verbesserte Dichtwirkung bietet. Zudem kann der Haltedübel beispielsweise auch bei Bauteilen mit unterschiedlichen Materialdicken eingesetzt werden.

Der Grundkörper des Haltedübels weist vorzugsweise einen ersten Abschnitt auf, der in die Öffnung ragt, und einen Flansch, der auf der Außenseite des Bauteils anliegt. Die Ausnehmung zur Aufnahme des Befestigungsmittels ist auf der dem Bauteil abgewandten Seite des Flansches angeordnet und erstreckt sich durch den Flansch in den ersten Abschnitt. Das Befestigungsmittel, beispielsweise eine Schraube, ist so vollständig innerhalb des Haltedübels gehalten. Es ist keine Öffnung im Haltedübel vorhanden, durch die die Schraube in das Innere des Bauteils ragen kann bzw. die eine weitere Undichtigkeit des Haltedübels verursachen kann.

Auf der Innenseite der Aufnahme können beispielsweise eine oder mehrere in Einschubrichtung verlaufende Vertiefungen vorgesehen sein, durch die der Haltedübel eine größere Elastizität erhält und somit flexibler eingesetzt werden kann.

Am Grundkörper des Haltedübels sind vorzugsweise Halteelemente vorgesehen, die am Rand der Öffnung angreifen und das Bauteil in der Öffnung fixieren.

Die Halteelemente weisen vorzugsweise Rastelemente auf, die auf der Rückseite der Öffnung eingreifen. Der Haltedübel wird mit dem ersten Abschnitt so weit in die Öffnung des Bauteils eingeschoben, bis die Rastelemente auf der Rückseite des Bauteils eingreifen und den Haltedübel so in der Öffnung fixieren. Diese Rastelemente bieten den Vorteil, dass der Haltedübel ohne Werkzeug am Bauteil montiert werden kann.

Das Dichtungselement umfasst den Flansch vorzugsweise radial, sodass das Dichtungselement mit einem möglichst großen Umfang an der Öffnung des Bauteils anliegt.

Um eine sichere Verbindung des Grundkörpers mit dem Dichtungselement herzustellen, weist der Grundkörper vorzugsweise Ausnehmungen auf, in die das Dichtungselement ragt.

Diese Ausnehmung kann beispielsweise eine radial umlaufende Nut sein, die am Grundkörper ausgebildet ist.

Um den Haltedübel in der Öffnung zu zentrieren bzw. ausrichten zu können, weist der Grundkörper beispielsweise Aufnahmen für ein Werkzeug auf.

Des Weiteren ist ein Verfahren zur Montage eines erfindungsgemäßen Haltedübels vorgesehen, das folgende Schritte aufweist:
- der Haltedübel wird in eine Öffnung eines Bauteils eingesetzt und fixiert,
- das Dichtungselement wird über den Schmelzpunkt des Dichtungselements erwärmt, und
- das Dichtungselement wird abgekühlt, sodass das Dichtungselement eine stoffschlüssige Verbindung mit dem Bauteil eingeht und die Öffnung des Bauteils abdichtet.

Nach dem Einsetzen des Haltedübels kann auf das Bauteil eine Beschichtung oder ein Lack aufgebracht werden.

Beschichtungen oder Lacke im Automobilbereich werden meistens durch ein Erwärmen des Lackes auf das Bauteil eingebrannt. Die Beschichtung oder der Lack wird vorzugsweise nach dem Aufbringen auf das Bauteil erhitzt, wobei das Dichtungselement ebenfalls über den Schmelzpunkt erhitzt wird. Es ist somit nicht notwendig, das Dichtungselement in einem zusätzlichen Arbeitsschritt zu erwärmen und abkühlen zu lassen. Dies kann beim Einbrennen des Lacks erfolgen, sodass die Herstellungszeit des Bauteils wesentlich verkürzt werden kann.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Haltedübels,
- Figur 2 eine zweite perspektivische Ansicht des Haltedübels aus Figur 1,
- Figur 3 eine Ansicht des erfindungsgemäßen Haltedübels in montiertem Zustand
- Figur 4 eine Schnittansicht des Haltedübels aus Figur 3 im Schnitt I-I,
- Figur 5 eine zweite Schnittansicht des Haltedübels aus Figur 3 im Schnitt II-II, und
- Figur 6 eine dritte Schnittansicht des Haltedübels aus Figur 3 im Schnitt III-III.

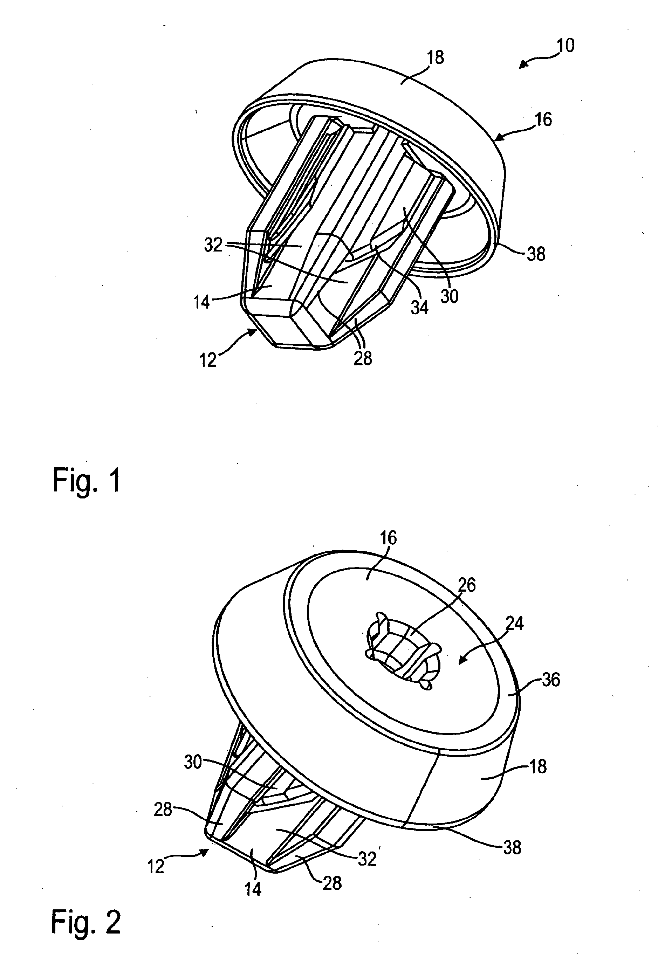

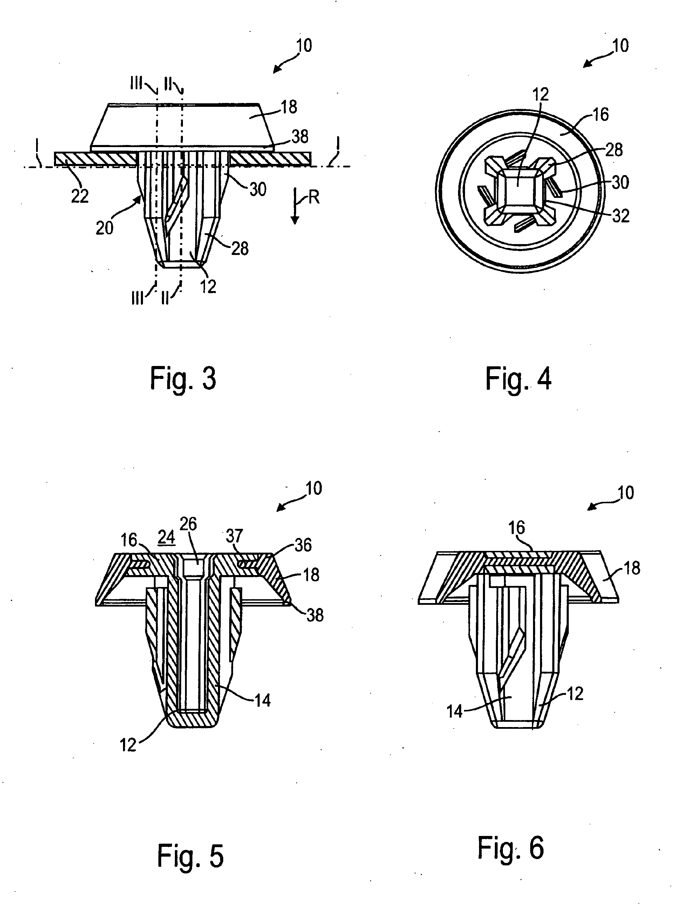

Der in den Figuren 1 und 2 gezeigte Haltedübel 10 hat einen Grundkörper 12 aus einem harten Kunststoff mit einem ersten Abschnitt 14 und einem Flansch 16, an dem ein Dichtungselement 18 aus einem flexiblen Kunststoff befestigt ist. Der Haltedübel kann mit dem ersten Abschnitt 14 in eine Einschubrichtung R in eine Öffnung 20 eines Bauteils 22 eingeschoben und in der Öffnung 20 fixiert werden (siehe auch Figur 3). Auf der dem Bauteil 22 abgewandten Vorderseite 24 des Haltedübels 10 ist eine Aufnahme 26 vorgesehen, in der ein Befestigungsmittel befestigt werden kann.

Wie insbesondere in Figur 4 zu sehen ist, hat der erste Abschnitt 14 hier einen quadratischen Querschnitt, der in Einschubrichtung R konisch zuläuft. Durch den quadratischen Querschnitt ist der Haltedübel 10 in einer vorzugsweise rechteckigen Öffnung 20 zuverlässig fixiert, so dass ein Verdrehen, beispielsweise beim Einsetzen des Befestigungsmittels, verhindert ist. Der Haltedübel 10 bzw. der Grundkörper 12 kann aber auch einen anderen Querschnitt aufweisen.

Die Aufnahme 26 für das Befestigungselement ist hier auf der Vorderseite 24 des Haltedübels 10 vorgesehen und erstreckt sich durch den Flansch 16 in den ersten Abschnitt 14 des Grundkörpers 12. Auf der Innenseite der Aufnahme 26 kann beispielsweise ein Gewinde vorgesehen sein, in das eine Schraube eingedreht werden kann. Das Befestigungsmittel kann aber auch auf andere Weise in der Aufnahme 26 befestigt werden. Es ist aber beispielsweise auch denkbar, dass auf der Innenseite der Aufnahme 26 ein oder mehrere Rastelemente vorgesehen sind.

An der Innenseite der Aufnahme 26 sind hier mehrere in Einschubrichtung R verlaufende Vertiefungen 27 vorgesehen. Durch diese erhält der Haltedübel eine größere Elastizität, so dass der Haltedübel flexibler eingesetzt werden kann. Die Vertiefungen sind hier zudem so ausgebildet, dass sie eine Aufnahme für ein Werkzeug, hier für einen Schraubendreher bilden. Der Haltedübel kann so in der Öffnung 20 ausgerichtet werden bzw. während der Montage des Befestigungselements gehalten werden.

In jeder der Ecken ist ein Halteelement 28 angeordnet, an dem jeweils ein Rastelement 30 befestigt ist. Die Rastelemente 30 sind federn an den Halteelementen 28 gelagert und können in Aussparungen 32 am Grundkörper 12 geschwenkt werden. Die Rastelemente 30 haben jeweils in Einschubrichtung R einen rampenartigen Abschnitt 34, der beim Einschieben des Haltedübels 10 in die Öffnung 20 mit dem Rand der Öffnung in Anlage kommt und vom Rand der Öffnung 20 verdrängt wird, so dass die Rastelemente 30 in die Aussparungen 32 gedrängt werden. Beim weiteren Einschieben des Haltedübels 10 können die Rastelemente 30 vom Grundkörper 12 wegfedern, so dass diese auf der Rückseite des Bauteils 22 eingreifen und den Haltedübel 10 am Bauteil 22 fixieren.

Das Dichtungselement 18 ist hier mit einem ringförmigen Bereich 36 am Flansch 16 des Haltedübels 10 befestigt. Der Flansch 16 hat dazu eine als radial umlaufende Nut ausgebildete Ausnehmung 37, in die das Dichtungselement 18 ragt (Figur 5). Das Dichtungselement 18 hat zudem eine Dichtlippe 38, die in montiertem Zustand des Haltedübels 10 um die Öffnung 20 umlaufend am Bauteil 22 anliegt und so die Öffnung 20 abdichtet.

Das Dichtungselement 18 ist hier aus einem wärmeexandierbaren, thermoplastischen Kunststoff hergestellt. Der Haltedübel 10 wird nach dem Einsetzen in die Öffnung 20 über den Schmelzpunkt des Dichtungselements 18 erhitzt. Anschließend kann der Haltedübel sich abkühlen. Dabei geht der Kunststoff eine stoffschlüssige Verbindung mit dem Bauteil ein und stellt so eine sichere Abdichtung der Öffnung her. Da das Dichtungselement 18 aus einem flexiblen Material hergestellt ist, hält diese Abdichtung auch mechanischen Beanspruchungen, verursacht beispielsweise durch die Montage des Befestigungsmittels oder durch Vibrationen, stand. Figur 6 zeigt den Haltedübel in einer weiteren Schnittansicht.

Um die Abdichtung weiter zu verbessern, ist es auch denkbar, dass das Dichtungselement 18 aus einem Material hergestellt ist, das sich unter Wärmeeinwirkung ausdehnt. Dadurch ist zusätzlich zur stoffschlüssigen Verbindung ein Ausgleich von Unebenheiten im Bauteil 22 möglich. Das Dichtungselement muss auch nicht vollständig aus dem thermoplastischen Material hergestellt sein. Es ist auch denkbar, dass nur der Bereich des Dichtungselements 18, der am Bauteil 22 anliegt, aus einem thermoplastischen oder expandierenden Material hergestellt ist.

Das Dichtungselement 18 ist vorzugsweise an den Grundkörper 18 angespritzt, es ist aber auch denkbar, das Dichtungselement 18 auf andere Weise am Grundkörper 12 zu befestigen. Insbesondere muss der Grundkörper keine Nut aufweisen.

Das Bauteil 22 kann vor oder nach dem Einsetzen des Haltedübels 10 auch lackiert werden. Wird das Bauteil 22 nach dem Einsetzen des Haltedübels 10 lackiert, ist es beispielsweise möglich, dass das Dichtungselement 18 während des Einbrennvorganges des Lackes oder der Beschichtung erwärmt wird, so dass kein zusätzlicher Arbeitsschritt zur Erwärmung des Dichtungselements 18 notwendig ist.

Zusätzlich kann der Haltedübel 10 auch Federelemente aufweisen, die in montiertem Zustand des Haltedübels 10 am Rand der Öffnung 20 anliegen und den Haltedübel 10 in der Öffnung fixieren bzw. zentrieren können.

## Patentansprüche

1. Haltedübel (10) zur Befestigung eines Befestigungsmittels an einem Bauteil (22), insbesondere an einem Karosserieteil, wobei der Haltedübel (10) in eine Öffnung (20) des Bauteils (22) eingesetzt und arretiert werden kann und eine Aufnahme (26) für das Befestigungsmittel aufweist, mit einem Grundkörper (12) aus einem harten Material, der in die Öffnung (20) ragt und den Haltedübel (10) in der Öffnung (20) fixieren kann, und mit einem Dichtungselement (18) aus einem flexiblen Kunststoff, das eine umlaufende Dichtlippe (38) aufweist, die in montiertem Zustand des Haltedübels (10) am Bauteil (22) anliegt und die Öffnung (20) des Bauteils (22) abdichtet, wobei das Dichtungselement (18) zumindest teilweise aus einem Material hergestellt ist, das unter Wärmeeinwirkung eine stoffschlüssige Verbindung mit dem Bauteil (22) eingeht, **dadurch gekennzeichnet, dass** am Grundkörper (12) Federelemente vorgesehen sind, die den Haltedübel (10) in der Öffnung (20) zentrieren.

2. Haltedübel nach Anspruch 1, **dadurch gekennzeichnet, dass** das Dichtungselement (18) aus einem Kunststoff hergestellt ist, der sich unter Wärmeeinwirkung irreversibel ausdehnt.

3. Haltedübel nach Anspruch 1 oder 2, **dadurch gekennzeichnet, dass** der Grundkörper (12) einen ersten Abschnitt (14) aufweist, der in die Öffnung (20) ragt, und einen Flansch (16), der auf der Außenseite des Bauteils (22) anliegt, wobei die Aufnahme (26) für das Befestigungsmittels auf der dem Bauteil (22) abgewandten Seite des Flansches (16) angeordnet ist und sich durch den Flansch (16) in den ersten Abschnitt (14) erstreckt.

4. Haltedübel nach einem der vorhergehenden Ansprüche, **dadurch gekennzeichnet, dass** auf der Innenseite der Aufnahme (26) eine oder mehrere in Einschubrichtung (R) verlaufende Vertiefungen (27) vorgesehen sind.

5. Haltedübel nach einem der vorhergehenden Ansprüche, **dadurch gekennzeichnet, dass** am Grundkörper (12) Haltelemente (28) vorgesehen sind, die am Rand der Öffnung (20) angreifen und den Haltedübel (10) in der Öffnung (20) fixieren.

6. Haltedübel nach Anspruch 5, **dadurch gekennzeichnet, dass** die Halteelemente (28) Rastelemente (30) aufweisen, die auf der Rückseite der Öffnung (20) eingreifen.

7. Haltedübel nach einem der vorhergehenden Ansprüche, **dadurch gekennzeichnet, dass** das Dichtungselement (18) den Flansch (16) radial umfasst.

8. Haltedübel nach einem der vorhergehenden Ansprüche, **dadurch gekennzeichnet, dass** der Grundkörper (12) mindestens eine Ausnehmung (37) aufweist, in die das Dichtungselement (18) ragt.

9. Haltedübel nach Anspruch 8, **dadurch gekennzeichnet, dass** die Ausnehmung (37) eine radial umlaufende Nut ist.

10. Haltedübel nach einem der vorhergehenden Ansprüche, **dadurch gekennzeichnet, dass** der Grundkörper (12) Aufnahmen für ein Werkzeug aufweist.

11. Verfahren zur Montage eines Haltedübels nach einem der vorhergehenden Ansprüche mit folgenden Schritten:
- der Haltedübel (10) wird in eine Öffnung (20) eines Bauteils (22) eingesetzt und fixiert,
- das Dichtungselement (18) wird über den Schmelzpunkt des Dichtungselements erwärmt,
- das Dichtungselement (18) wird abgekühlt, sodass das Dichtungselement (18) eine stoffschlüssige Verbindung mit dem Bauteil (22) eingeht und die Öffnung (20) des Bauteils (22) abdichtet.

12. Verfahren nach Anspruch 11, **dadurch gekennzeichnet, dass** nach dem Einsetzen des Haltedübels (10) eine Beschichtung oder ein Lack auf das Bauteil (22) aufgebracht wird.

13. Verfahren nach Anspruch 12, **dadurch gekennzeichnet, dass** die Beschichtung oder der Lack nach dem Aufbringen auf das Bauteil (22) erhitzt wird, wobei das Dichtungselement (18) über den Schmelzpunkt erhitzt wird.

## Claims

1. A holding dowel (10) for fastening a fastening means to a component (22), in particular to a vehicle body part, the holding dowel (10) being adapted to be inserted into and arrested in an opening (20) of the component (22) and having a mount (26) for the fastening means, comprising a base body (12) made from a hard material, which protrudes into the opening (20) and is adapted to fix the holding dowel (10) in place in the opening (20), and comprising a sealing member (18) made from a flexible plastic material, which includes a surrounding sealing lip (38) which, in the installed condition of the holding dowel (10), rests against the component (22) and seals the opening (20) of the component (22), the sealing member (18) being produced at least partly from a material which under the influence of heat establishes a substance-to-substance bond with the component (22), **characterized in that** the base body (12) has spring members provided thereon which center the holding dowel (10) in the opening (20).

2. The holding dowel according to claim 1, **characterized in that** the sealing member (18) is produced from a plastic material which irreversibly expands under the influence of heat.

3. The holding dowel according to claim 1 or 2, **characterized in that** the base body (12) includes a first section (14) protruding into the opening (20), and a flange (16) resting against the outside of the component (22), the mount (26) for the fastening means being arranged on the side of the flange (16) facing away from the component (22) and extending through the flange (16) into the first section (14).

4. The holding dowel according to any of the preceding claims, **characterized in that** one or more depressions (27) extending in the insertion direction (R) are provided on the inside of the mount (26).

5. The holding dowel according to any of the preceding claims, **characterized in that** the base body (12) has holding members (28) provided thereon which engage the edge of the opening (20) and fix the holding dowel (10) in place in the opening (20).

6. The holding dowel according to claim 5, **characterized in that** the holding members (28) include locking members (30) which engage on the rear side of the opening (20).

7. The holding dowel according to any of the preceding claims, **characterized in that** the sealing member (18) radially encircles the flange (16).

8. The holding dowel according to any of the preceding claims, **characterized in that** the base body (12) includes at least one recess (37) into which the sealing member (18) protrudes.

9. The holding dowel according to claim 8, **characterized in that** the recess (37) is a radially surrounding groove.

10. The holding dowel according to any of the preceding claims, **characterized in that** the base body (12) includes mounts for a tool.

11. A method of installing a holding dowel according to any of the preceding claims, comprising the following steps:
- inserting the holding dowel (10) into an opening (20) of a component (22) and fixing it in place;
- heating the sealing member (18) to above the melting point of the sealing member;
- cooling the sealing member (18), so that the sealing member (18) establishes a substance-to-substance bond with the component (22) and seals the opening (20) of the component (22).

12. The method according to claim 11, **characterized in that** after the holding dowel (10) is inserted, a coating or a paint is applied onto the component (22).

13. The method according to claim 12, **characterized in that** after its application onto the component (22), the coating or the paint is heated, the sealing member (18) being heated to above the melting point.

## Revendications

1. Cheville de retenue (10) pour la fixation d'un moyen de fixation sur un composant (22), en particulier sur une pièce de carrosserie, la cheville de retenue (10) étant apte à être insérée et arrêtée dans une ouverture (20) du composant (22) et présentant un logement (26) pour le moyen de fixation, comprenant un corps de base (12) en une matière dure qui fait saillie dans l'ouverture (20) et qui peut fixer la cheville de retenue (10) dans l'ouverture (20), et comprenant un élément d'étanchéité (18) en une matière plastique flexible qui présente une lèvre d'étanchéité (38) périphérique reposant à l'état monté de la cheville de retenue (10) sur le composant (22) et étanchant l'ouverture (20) du composant (22), l'élément d'étanchéité (18) étant au moins partiellement réalisé en une matière qui entre en liaison par coopération de matières avec le composant (22) sous l'effet de la chaleur, **caractérisée en ce que** des éléments ressorts sont prévus sur le corps de base (12), lesquels centrent la cheville de retenue (10) dans l'ouverture (20).

2. Cheville de retenue selon la revendication 1, **caractérisée en ce que** l'élément d'étanchéité (18) est réalisé en une matière plastique qui s'étend de manière irréversible sous l'effet de la chaleur.

3. Cheville de retenue selon la revendication 1 ou 2, **caractérisée en ce que** le corps de base (12) présente un premier tronçon (14) qui fait saillie dans l'ouverture (20), et une bride (16) qui repose sur la face extérieure du composant (22), le logement (26) pour le moyen de fixation étant agencé du côté de la bride (16) qui est détourné du composant (22) et s'étendant à travers la bride (16) dans le premier tronçon (14).

4. Cheville de retenue selon l'une des revendications précédentes, **caractérisée en ce qu'**un ou plusieurs creux (27) qui s'étendent dans le sens d'insertion (R) sont prévus sur la face intérieure du logement (26).

5. Cheville de retenue selon l'une des revendications précédentes, **caractérisée en ce que** sur le corps de base (12) il est prévu des éléments de retenue (28) qui s'engagent sur le bord de l'ouverture (20) et fixent la cheville de retenue (10) dans l'ouverture (20).

6. Cheville de retenue selon la revendication 5, **caractérisée en ce que** les éléments de retenue (28) présentent des éléments d'enclenchement (30) qui s'engagent sur la face arrière de l'ouverture (20).

7. Cheville de retenue selon l'une des revendications précédentes, **caractérisée en ce que** l'élément d'étanchéité (18) entoure la bride (16) de manière radiale.

8. Cheville de retenue selon l'une des revendications précédentes, **caractérisée en ce que** le corps de base (12) présente au moins un évidement (37) dans lequel l'élément d'étanchéité (18) fait saillie.

9. Cheville de retenue selon la revendication 8, **caractérisée en ce que** l'évidement (37) est une gorge radialement périphérique.

10. Cheville de retenue selon l'une des revendications précédentes, **caractérisée en ce que** le corps de base (12) présente des logements pour un outil.

11. Procédé de montage d'une cheville de retenue selon l'une des revendications précédentes, comprenant les étapes suivantes :
- la cheville de retenue (10) est insérée et fixée dans une ouverture (20) d'un composant (22),
- l'élément d'étanchéité (18) est chauffé au-delà du point de fusion de l'élément d'étanchéité,
- l'élément d'étanchéité (18) est refroidi de sorte que l'élément d'étanchéité (18) entre en liaison par coopération de matières avec le composant (22) et étanche l'ouverture (20) du composant (22).

12. Procédé selon la revendication 11, **caractérisé en ce qu'**un revêtement ou un vernis est appliqué sur le composant (22) après l'insertion de la cheville de retenue (10).

13. Procédé selon la revendication 12, **caractérisé en ce que** le revêtement ou le vernis est chauffé après l'application sur le composant (22), l'élément d'étanchéité (18) étant chauffé au-delà du point de fusion.
